# EUROPÄISCHE PATENTSCHRIFT

(11) **EP 1 280 677 B1**
(45) Veröffentlichungstag und Bekanntmachung des Hinweises auf die Patenterteilung: **25.08.2004**
(21) Anmeldenummer: 01923528.2
(22) Anmeldetag: 23.03.2001
(51) Int. Cl.: B60K 6/04, B60K 41/00

(54) **HYBRIDGETRIEBE, INSBESONDERE FÜR KRAFTFAHRZEUGE**
HYBRID TRANSMISSION, PARTICULARLY FOR MOTOR VEHICLES
TRANSMISSION, NOTAMMENT POUR AUTOMOBILES

(30) Priorität: 02.05.2000 DE 10021025
(43) Veröffentlichungstag der Anmeldung: 05.02.2003
(73) Patentinhaber: ROBERT BOSCH GMBH, 70442 Stuttgart (DE)
(72) Erfinder: TUMBACK, Stefan, 70469 Stuttgart (DE)
(86) Internationale Anmeldenummer: PCT/DE2001/001120
(87) Internationale Veröffentlichungsnummer: WO 2001/083249

(56) Entgegenhaltungen:
- WO-A-00/26053
- US-A- 4 588 040
- US-A- 5 558 595
- US-A- 5 571 058
- US-A- 5 730 676
- US-A- 5 775 449
- US-A- 5 935 035

## Beschreibung

### Stand der Technik

Die Erfindung betrifft ein Getriebe, insbesondere für Kraftfahrzeuge, nach dem Oberbegriff der Ansprüche 1 und 2.

Ein derartiges Getriebe ist aus der gattungsgemäßen US 5,571,058 bekannt. Es weist eine Eingangswelle auf, die mit leistungsverzweigenden Getrieben gekoppelt ist, die mit einer Ausgangswelle koppelbar sind. Jedes der leistungsverzweigenden Getriebe ist mit einer der Elektromaschinen gekoppelt.

Zur Steigerung des Gesamtwirkungsgrades, die insbesondere bei konstanten Fahrzuständen erreicht werden soll, sind vier verschiedene Fahrzustände möglich. Hierzu ist für jeden Fahrzustand eine Kupplung vorgesehen, d.h. es werden vier Kupplungen benötigt. Der Kraftfluß erfolgt immer über wenigstens eines von insgesamt sechs Umlaufgetrieben. Dadurch ist der Aufbau dieses Getriebes recht aufwendig. Folglich steigen das Gewicht und die Kosten.

Ferner ist aus der US 5,558,589 ein Getriebe bekannt, bei dem der Kraftfluß stets über wenigstens ein Umlaufgetriebe erfolgt. Hierbei ist ebenfalls eine Mehrzahl von Kupplungen vorgesehen, die somit auch erhöhte Kosten zu Folge haben.

### Vorteile der Erfindung

Das erfindungsgemäße Getriebe, insbesondere für Kraftfahrzeuge, mit den kennzeichnenden Merkmalen der Ansprüche 1 und 2 hat demgegenüber den Vorteil, daß es einfacher aufgebaut ist und dennoch einen guten Wirkungsgrad aufweist. Hierfür sind gemäß Anspruch 1 Mittel zur Kopplung der Eingangswelle mit der Ausgangswelle unter Überbrückung der Elektromaschinen und der Umlaufgetriebe vorgesehen. Gemäß Anspruch 2 dienen die Mittel der Kopplung der Eingangswelle mit der Ausgangswelle unter Überbrückung der Elektromaschinen und einer Unterdrückung von Relativbewegungen der Getriebeteile der Umlaufgetriebe.

Gerade im Überbrückungszustand der Elektromaschine und der Umlaufgetriebe kann die Elektromaschine dennoch unter Last mitarbeiten, d.h. im Boostbetrieb, bei der Rekuperation von Bremsenergie und im Generatorbetrieb. Es ist auch im Notbetrieb, also beim Ausfall einer Elektromaschine, noch ein Fahrbetrieb mit dem vollem Komfort der stufenlosen Übersetzungsänderung möglich.

Durch eine formschlüssige Verbindung der Eingangswelle mit einer Getriebewelle wird durch kraftschlüssige Verbindungen bedingter Verschleiß vermieden. Der Aufbau ist besonders einfach, wenn ein Zahnradpaar zwischen der Eingangswelle und einer Getriebewelle angeordnet ist.

Ferner läßt sich durch die Verwendung zweier Getriebewellen ein Schalten der Gänge ohne Zugkraftunterbrechung erzielen. Mittels zweier Elektromaschinen ist es darüber hinaus möglich, im Bereich zwischen zwei Getriebestufen eine stufenlose Übersetzung zu ermöglichen.

Weitere Vorteile und vorteilhafte Weiterbildungen des erfindungsgemäßen Getriebes, insbesondere für Kraftfahrzeuge, ergeben sich aus den Unteransprüchen und der Beschreibung.

### Zeichnung

Ausführungsbeispiele der Erfindung sind in der Zeichnung dargestellt und werden nachfolgend näher erläutert. Es zeigen:
Figur 1 ein erstes erfindungsgemäßes Getriebe in einer schematischen Darstellung und die
Figuren 2 bis 4 gegenüber der Figur 1 abgewandelte Getriebe, ebenfalls in schematischen Darstellungen.

### Beschreibung der Ausführungsbeispiele

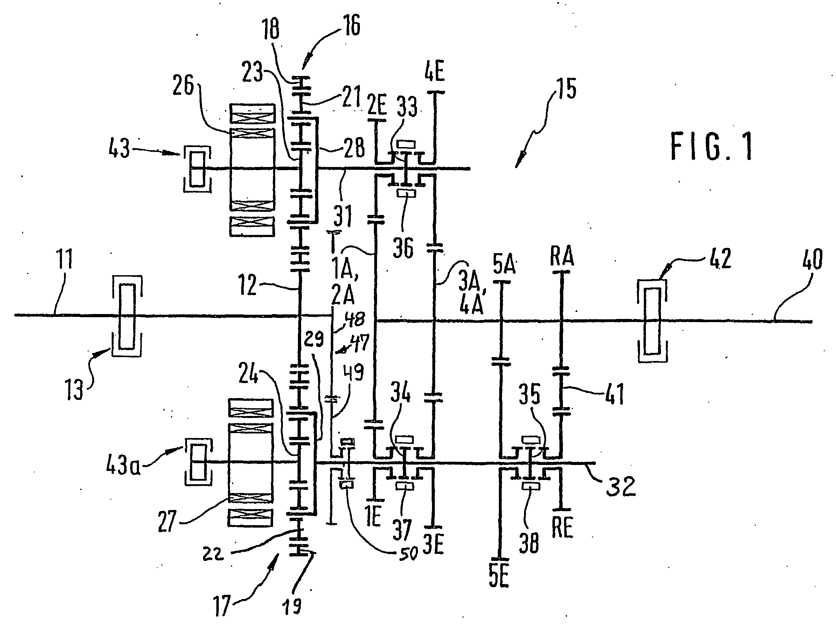

In der Figur 1 ist ein Teil des Antriebsstrangs eines Kraftfahrzeugs dargestellt. Der Antriebsstrang umfaßt unter anderem die Kurbelwelle 11 eines ansonsten nicht dargestellten Verbrennungsmotors, an deren Ende ein Zahnkranz 12 angeordnet ist. Weiterhin wirkt die Kurbelwelle 11 mit einer Motorbremse 13 zusammen. Alternativ kann statt der Motorbremse 13 auch ein Freilauf verwendet werden. Es ist auch möglich, daß weder eine Motorbremse 13 noch ein Freilauf vorgesehen sind. An den Zahnkranz 12 ist ein Getriebe 15 ankoppelbar, das im Ausführungsbeispiel als Dreiwellengetriebe ausgebildet ist.

Das Getriebe 15 weist zwei leistungsverzweigende Getriebe, vorzugsweise identische Umlaufgetriebe, insbesondere zwei Planetengetriebesätze 16, 17 auf. Jeder Planetengetriebesatz 16, 17 hat, wie an sich bekannt, jeweils ein innen und außen verzahntes Hohlrad 18, 19, mehrere Plänetenräder 21, 22 sowie ein Sonnenrad 23, 24. Die Ankopplung des Getriebes 15 an den Zahnkranz 12 erfolgt über die Außenverzahnungen der Hohlräder 18, 19 der Planetengetriebesätze 16, 17. Auf der der Kurbelwelle 11 zugewandten Seite der Planetengetriebesätze 16, 17 ist jedes Sonnenrad 23, 24 mit einer Elektromaschine 26, 27 gekoppelt. Die miteinander, zum Beispiel über einen elektrischen Zwischenkreis und mit der Bordbatterie des Kraftfahrzeugs verbundenen Elektromaschinen 26, 27 sind mit einer Leistungselektronik für einen Vierquadrantenbetrieb ausgerüstet. Die Planetenträger 28, 29 der Planetengetriebesätze 16, 17 sind auf der den Elektromaschinen 26, 27 gegenüberliegenden Seite mit Getriebewellen 31, 32, bei denen es sich vorzugsweise um Vorgelegewellen handelt, verbunden.

Die beiden Getriebewellen 31, 32 tragen die Eingangszahnräder 1E bis 5E und RE eines 5-Gang-Schaltgetriebes. Um die lose auf den Getriebewellen 31, 32 angeordneten Eingangszahnräder 1E bis 5E und RE mit den Getriebewellen 31, 32 zu verbinden, ist auf diesen ferner zwischen den Eingangszahnrädern 2E und 4E, 1E und 3E sowie 5E und RE jeweils ein Zahnrad 33, 34, 35 drehfest angeordnet. Die Zahnräder 33, 34, 35 können mittels elektrisch betätigbaren Schiebemuffen 36, 37, 38 und Klauenkupplungen mit dem jeweiligen Eingangszahnrad 1E bis 5E und RE in Eingriff gebracht und somit kraftschlüssig verbunden werden. Statt der elektrischen Betätigung ist auch eine andere, beispielsweise hydraulische Betätigung denkbar.

Die Eingangszahnräder 1E bis 5E und RE kämmen in Ausgangszahnrädern 1A bis 5A und RA, die auf einer Ausgangswelle 40 drehfest angeordnet sind, wobei zwischen dem Eingangszahnrad RE und dem Ausgangszahnrad RA noch ein Zwischenzahnrad 41 angeordnet ist. Um ein Blockieren bzw. Feststellen der Ausgangswelle 40 zu ermöglichen, wirkt diese weiterhin mit einer Bremse 42 zusammen. Die Bremse 42 kann auch die Betriebsbremse des Kraftfahrzeugs sein.

Ferner ist zwischen der Kurbelwelle 11 und der Getriebewelle 32 ein Zahnradpaar 47 angeordnet. Hierbei ist ein Zahnrad 48 drehfest auf der Kurbelwelle 11 und ein Zahnrad 49 auf der Getriebewelle 31 angeordnet. Zwischen dem Zahnrad 49 auf der Getriebewelle 31 ist noch eine Schalteinheit 50, bei der es sich vorzugsweise um eine Klauenkupplung handelt, vorgesehen. Alternativ sind auch synchronisiert schaltende Schalteinheiten 50 oder Lamellenkupplungen einsetzbar. Das Zahnradpaar 47 und die Schalteinheit 50 stellen somit Mittel zur Kopplung der Eingangswelle 31 mit der Ausgangswelle 40 unter Überbrückung der beiden Elektromaschinen 26, 27 und der Umlaufgetriebe 16 dar. Das Zahnradpaar 47 und die Schalteinheit 50 dienen hierbei einer formschlüssigen Verbindung der Kurbelwelle 11 mit der Getriebewelle 31 und somit der Ausgangswelle 40.

Alternativ ist es auch möglich, das Zahnradpaar 47 zwischen der Getriebewelle 32 oder zwei Zahnradpaare 47 zwischen beiden Getriebewellen 31, 32 vorzusehen. Anstelle des Zahnradpaares 47 ist es auch möglich, zum Beispiel einen Zahnriemen, eine Kette oder andere geeignete Mittel zur Überbrückung der Elektromaschinen 21, 22 und der Umlaufgetriebe 16, 17 zu verwenden. Wenn die Kurbelwelle 11 und die Ausgangswelle 40 miteinander fluchten, so wie in der Figur 1 dargestellt, können deren einander zugewandte Enden auch direkt über eine Verzahnung miteinander verbunden werden. Dies ist bei konstant hoher Geschwindigkeit denkbar.

Im folgenden werden verschiedene Betriebsarten beschrieben, die mit dem oben beschriebenen Getriebe 15 realisiert werden können, wobei die Steuerung und Regelung sowohl des Getriebes 15 als auch des Verbrennungsmotors mittels elektronischer Steuergeräte erfolgt: Zum Starten des Verbrennungsmotors des Kraftfahrzeugs bei Fahrzeugstillstand ist die Bremse 42 aktiviert, d.h. daß die Ausgangswelle 40 blockiert ist. Ferner ist an den beiden Getriebewellen 31, 32 jeweils ein Gang, zum Beispiel der erste und der zweite Gang eingelegt, wozu sich die Schiebemuffen 37, 38 in Überdeckung mit den entsprechenden Eingangszahnrädern 1E und 2E befinden. Durch das Einlegen eines Ganges auf jeder Getriebewelle 31, 32 sind die Planetenträger 28, 29 der Planetengetriebesätze 16, 17 fest, d.h. sie können sich nicht drehen, wenn ein Startmoment über die Sonnenräder 23, 24 eingeleitet wird. Nun werden die beiden Elektromaschinen 26, 27 von der Bordbatterie motorisch betrieben. Das von den Elektromaschinen 26, 27 in die Sonnenräder 23, 24 eingeleitete Drehmoment erzeugt dabei über die sich drehenden Planetenräder 21, 22 eine Drehung des jeweiligen Hohlrades 18, 19, welche wiederum den Zahnkranz 12 der Kurbelwelle 11 mit der erforderlichen Startdrehzahl antreiben, wodurch der Verbrennungsmotor gestartet wird.

Eine übliche bzw. sinnvolle Auslegung der Planetengetriebesätze 16, 17 führt zu einer Startübersetzung von ca. 4:1. Unter der Annahme, daß ein erforderliches Startdrehmoment eines Verbrennungsmotors in der Größenordnung von ca. 200Nm liegt, muß somit jede als Elektromotor wirkende Elektromaschine 26, 27 ca. 25Nm bereitstellen. Dieses erforderliche Drehmoment bestimmt gleichzeitig die Baugröße bzw. Leistungsstufe der Elektromaschinen 26, 27.

Ergänzend wird an dieser Stelle angemerkt, daß die beiden Elektromaschinen 26, 27 im Startmodus, d.h. mit festgesetzten Planetenträgern 28, 29 nach dem Starten des Verbrennungsmotors ihrerseits über den Zahnkranz 12 vom Verbrennungsmotor getrieben werden. Aufgrund der oben erwähnten Übersetzungsverhältnisse der Planetengetriebesätze 16, 17 werden die Elektromaschinen 26, 27 dann mit etwa der vierfachen Motordrehzahl des Verbrennungsmotors angetrieben. Um die Grenzdrehzahlen der Elektromaschinen 26, 27 nicht zu überschreiten, sollte für diesen Fall die Motordrehzahl des Verbrennungsmotors während des Startmoduses begrenzt werden.

Nachfolgend wird der Normalbetrieb des Kraftfahrzeugs beschrieben, bei dem sich dieses mit einer gleichförmigen oder veränderlichen Geschwindigkeit bewegt. In diesem Fall ist in dem Getriebe 15 in beiden Getriebewellen 31, 32 jeweils ein Gang eingelegt, zum Beispiel der zweite und der dritte Gang. Die entsprechenden Zahnräder 2E und 3E sind somit kraftschlüssig mit den Zahnrädern 2A und 3A der Ausgangswelle 40 verbunden. Es besteht ein definiertes Verhältnis zwischen den Drehzahlen der beiden Planetenträger 28 und 29 entsprechend der Übersetzungsverhältnisse zwischen dem zweiten und dem dritten Gang, wobei der Planetenträger 28 des zweiten Ganges mit einer größeren Drehzahl dreht als der Planetenträger 29 des dritten Ganges. Weiterhin ist die Drehzahl der Ausgangswelle 40 proportional zur Fahrgeschwindigkeit des Kraftfahrzeugs. Da die vom Verbrennungsmotor getriebenen Hohlräder 18, 19 bei identischen Planetengetriebesätzen 16, 17 mit gleicher Drehzahl drehen, ergeben sich somit definierte Drehzahlen der mit den Elektromaschinen 26, 27 gekoppelten Sonnenräder 23, 24. Wird nun das Drehzahlniveau der beiden Elektromaschinen 26, 27 verändert, so verändert sich bei konstanter Motordrehzahl des Verbrennungsmotors auch das Verhältnis zwischen der Motordrehzahl des Verbrennungsmotors und der Drehzahl der Ausgangswelle 40. Mit anderen Worten gesagt bedeutet dies, daß eine Variation des Drehzahlniveaus der Elektromaschinen 26, 27 zu einer (stufenlosen) Variation der Getriebeübersetzung bei fest eingelegten Gängen an den Getriebewellen 31, 32 führt.

Bei einem von dem Verbrennungsmotor vorgegebenen Drehmoment und einem benötigten Antriebsmoment an der Ausgangswelle 40 ergibt sich ein fest vorgegebenes Summendrehmoment an den beiden Elektromaschinen 26, 27. Weiterhin steht das Drehmoment des Verbrennungsmotors und das Summendrehmoment an den beiden Elektromaschinen 26, 27 stets in einem festen Verhältnis, solange keine Bremse betätigt wird. Daher läßt sich das aktuelle Drehmoment des Verbrennungsmotors sehr genau aus dem Summendrehmoment der beiden Elektromaschinen 26, 27 ableiten, welches aus deren Steuerung bekannt ist. Die Kenntnis des aktuellen Drehmoments des Verbrennungsmotors ist für eine koordinierte Antriebsstrangund Motorsteuerung hilfreich bzw. kann diese vereinfachen oder verbessern.

Durch die Verzweigung des Drehmomentes über die beiden Getriebewellen 31, 32 kann das Summendrehmoment der beiden Elektromaschinen 26, 27 beliebig zwischen diesen aufgeteilt werden. Da aufgrund der unterschiedlichen eingelegten Gänge an den beiden Getriebewellen 31, 32 die beiden Elektromaschinen 26, 27 eine unterschiedliche Drehzahl aufweisen, variiert dabei auch deren elektrische Leistung.

Besonders vorteilhaft ist es, im Normalbetrieb die beiden Elektromaschinen 26, 27 als Generatoren wirken zu lassen, die lediglich die vom Bordnetz benötigte Energie bzw. Leistung erzeugen. Dies hat zur Folge, daß sich bei einer bestimmten erforderlichen elektrischen Leistung der beiden Elektromaschinen 26, 27 ein bestimmtes Drehzahlniveau an den beiden Elektromaschinen 26, 27 und somit auch ein bestimmtes Übersetzungsverhältnis des Getriebes 15 einstellt. Die mit den Elektromaschinen 26, 27 innerhalb bestimmter Grenzen mögliche stufenlose Veränderung des Übersetzungsverhältnisses wird allein dadurch erreicht, indem die vom Bordnetz benötigte elektrische Leistung zwischen den beiden generatorisch arbeitenden Elektromaschinen 26, 27 aufgeteilt wird, wobei keine verlustbehaftete Leistungsverzweigung zwischen den beiden Elektromaschinen 26, 27 entsteht.

Es genügt, wenn die mittels der beiden Elektromaschinen 26, 27 mögliche Spreizung des Übersetzungsverhältnisses einen relativ geringen Bereich abdeckt, da größere Veränderungen des Übersetzungsverhältnisses über einen Gangwechsel realisiert werden können. Wenn die mögliche Spreizung für einen Gang, zum Beispiel bei niedrigen Bordnetzleistungen, nicht ausreichend ist kann diese erhöht werden, indem entweder ein (verlustbehafteter) Leistungsfluß zwischen den beiden Elektromaschinen 26, 27 zugelassen wird, oder aber indem die elektrische Leistung zum Laden der Bordbatterie über den eigentlichen Bordnetzbedarf hinaus erhöht wird.

In konstanten Fahrzuständen ist die stufenlose Getriebeverstellung jedoch von untergeordneter Bedeutung. Ein mechanischer Getriebedurchgriff mittels des Zahnradpaares 47 und der Schalteinheit 50 überbrückt den leistungsverzweigenden Getriebeteil, der durch die Umlaufgetriebe 16, 17 dargestellt wird, und stellt eine kinematische Kopplung vom Verbrennungsmotor und der Ausgangswelle 40 her. Über die Wahl eines Ganges im Schaltteil kann zwischen mehreren festen Übersetzungen ausgewählt werden. Der Gesamtwirkungsgrad des Getriebes 15, der bei stufenlosem Fahrbetrieb auch den Wirkungsgrad der elektrischen Leistungsübertragung einschließt, kann so verbessert werden.

Durch diese kinematische Kopplung bzw. die bereits genannte Überbrückung werden gleichzeitig die Drehzahlen der Elektromaschinen 26, 27 festgelegt. Die Drehmomente und damit die elektrischen Leistungsflüsse sind nicht mehr an die Vortriebsleistung des Fahrzeugs gekoppelt. Das elektrische Energiebordnetz kann ebenso frei gesteuert werden wie z.B. eine sogenannten Boost-Funktion, bei der dem Fahrzeug zusätzliche Leistung aus der Batterie zur Verfügung gestellt wird. Alternativ kann eine sogenannte Rekuperation der Bremsenergie realisiert werden. Zusätzlich kann durch den mechanischen Getriebedurchgriff ein kreisender Leistungsfluß (Blindleistung) vermieden werden, der andernfalls in bestimmten Fahrzuständen auftreten kann.

Im einzelnen sieht ein Schaltablauf hierbei wie folgt aus:
1. Im stufenlosen Betrieb wird die Drehzahl des Verbrennungsmotors so eingestellt, daß die Getriebeübersetzung i = Drehzahl Verbrennungsmotor / Drehzahl Ausgangswelle 40 der festen Übersetzung über das Zahnradpaar 47 und eine der Stufen 1E/1A, 3E/3A, 5E/5A oder RE/RA entspricht. Das Zahnrad 49 bzw. Losrad des Zahnradpaares 47 dreht dann synchron mit der Getriebewelle 32.
2. Die Schalteinheit 50 wird geschlossen. Nun erfolgt der Kraftfluß von der Kurbelwelle 11 über das Zahnradpaar 47, die Schalteinheit 50, unter Überbrückung der Umlaufgetriebe 16, 17 und der Elektromaschinen 26, 27, über die Getriebewelle 31, eine der Schalteinheiten 37, 38, von einem der Zahnräder 1E, 3E, 5E auf eines der Zahnräder 1A, 3A, 5A und schließlich auf die Ausgangswelle 40.
3. Die Elektromaschinen 16, 17 können nun abgeschaltet oder nach anderen Kriterien gesteuert werden. Die Leistungsübertragung zum Rad ist dennoch gewährleistet.

Vor dem Öffnen der Schalteinheit 50 bzw. des mechanischen Getriebedurchgriffes wird das Zahnradpaar 47 zunächst durch eine geeignete Steuerung der Elektromaschinen 16, 17 entlastet. Die Schalteinheit 50 wird dann geöffnet. Die Getriebeübersetzung, die sich durch das Zahnradpaar 47 ergibt, muß den Bedürfnissen der oben genannten Fahrzustände angepaßt werden. Vorteilhafterweise wird zumindest eine der wählbaren Getriebeübersetzungen daher als Overdrive ausgelegt, d.h. sie wird ins Schnelle übersetzt mit einem Übersetzungsverhältnis von zum Beispiel 0,6 bis 0,8.

In der gezeigten Anordnung besteht darüber hinaus die Möglichkeit, durch eine konstante Getriebestufe verschiedene, feste Übersetzungen zu realisieren, von denen eine als Overdrive ausgeführt ist. Vorteilhaft ist die Auslegung der Übersetzungen zudem so, dass bei überbrückten Umlaufgetrieben 16, 17 günstige Betriebspunkte der Elektromaschinen 26, 27 realisiert werden. Diese sollten zumindest so, sein, dass eine für den Betrieb des Fahrzeugs ausreichende Stromerzeugung bei gutem Wirkungsgrad möglich ist.

Nunmehr wird ein Schaltvorgang im Getriebe 15 erläutert, der zur Änderung des Übersetzungsverhältnisses erforderlich ist, wenn zum Beispiel der Verbrennungsmotor bei einer bestimmten Drehzahl bei entsprechend höherer Last eine höhere Fahrgeschwindigkeit ermöglichen soll. Dabei wird exemplarisch davon ausgegangen, daß an der zweiten Getriebewelle 32 vom dritten in den fünften Gang geschaltet werden soll, während in der ersten Getriebewelle 31 der vierte Gang eingelegt bleibt. Vor dem eigentlichen Schaltvorgang wird dazu die der zweiten Getriebewelle 32 zugeordnete Elektromaschine 27 lastfrei geschaltet, wodurch das Moment in der zweiten Getriebewelle 32, mit Ausnahme eines kleinen, aus der Massenträgheit der Bauteile herrührenden Moments, nahezu Null wird. Der Kraftfluß findet in diesem Zustand ausschließlich über die erste Getriebewelle 31 statt, wobei deren zugeordnete Elektromaschine 26 einen Teil des Antriebsmoments abstützt und dabei als Motor oder aber als Generator arbeiten kann. Sobald die zweite Getriebewelle 32 lastfrei ist, kann der eingelegte dritte Gang durch Trennen der Klauenkupplung und Verschieben der Schiebemuffe 37 herausgenommen werden. Anschließend erzeugt die Elektromaschine 27 der zweiten Getriebewelle 32 die erforderliche Synchronisationsdrehzahl, bei der die zweite Getriebewelle 32 mit einer Drehzahl gedreht wird, die der Drehzahl des über die Ausgangswelle 40 angetriebenen Zahnrads 5E des fünften Gangs entspricht. Wenn dies erfolgt ist, wird der Kraftschluß zwischen der zweiten Getriebewelle 32 und dem Zahnrad 5E durch Verschieben der Schiebemuffe 38 hergestellt. Die Steuerung des Getriebes 15 kann die zur Synchronisation der zweiten Getriebewelle 32 benötigte Drehzahl mittels der Drehzahlen der Elektromaschine 26 sowie des Verbrennungsmotors ermitteln. Zusätzliche Sensoren zur Drehzahlerfassung an den Getriebewellen 31, 32 sind nicht erforderlich.

Die anderen Schaltwechsel beim Hoch- bzw. Herunterschalten erfolgen sinngemäß, wobei bei allen Schaltwechseln charakteristisch ist, daß stets ein Kraftschluß zwischen der Kurbelwelle 11 des Verbrennungsmotors und der Ausgangswelle 40 über eine der beiden Getriebewellen 31, 32 vorhanden ist, so daß die Schaltvorgänge ohne Zugkraftunterbrechung erfolgen können.

Mit dem Getriebe 15 lassen sich besonders vorteilhaft sogenannte Hybridfahrzeuge betreiben, die sowohl einen Elektromotor als auch einen Verbrennungsmotor aufweisen. Der Fahrzeugbetrieb mittels Elektromotor, der zum Beispiel aus Gründen der Luftreinhaltung innerstädtisch erfolgt, wird dabei mittels den beiden Elektromaschinen 26, 27 realisiert, die aus der Bordbatterie mit der dafür erforderlichen Energie versorgt werden. Zur Abstützung des durch die Elektromaschinen 26, 27 über die Planetenträger 28, 29 in die Getriebewellen 31, 32 eingeleiteten Drehmoments müssen dabei die Hohlräder 18, 19 der Planetengetriebesätze 16, 17 festgesetzt werden. Dies erfolgt auf einfache Weise über ein Betätigen der Motorbremse 13, welche über den Zahnkranz 12 auf die Hohlräder 18, 19 wirkt.

Soll nun während des rein elektrischen Fahrens der Verbrennungsmotor wieder gestartet werden, so werden dazu der zweite und der Rückwärtsgang im Getriebe 15 eingelegt. Dabei dreht die Elektromaschine 27 rückwärts, das heißt mit der für den Motorstart erforderlichen Drehrichtung, während die Elektromaschine 26 vorwärts angetrieben wird. Von beiden Elektromaschinen 26, 27 wird somit ein gleichwirkendes antreibendes Drehmoment in die Ausgangswelle 40 eingeleitet. Aufgrund der unterschiedlichen Übersetzungsverhältnisse zwischen dem eingelegten zweiten Gang und dem eingelegten Rückwärtsgang wird über das Hohlrad 19 der dem Rückwärtsgang zugeordneten zweiten Elektromaschine 27 ein höheres (über die Motorbremse 13 abgestütztes) Drehmoment auf den Zahnkranz 12 übertragen als über das Hohlrad 20. Zum eigentlichen Starten genügt es daher, die Motorbremse 13 zu lösen, worauf der Zahnkranz 12 und die Kurbelwelle 11 in der erforderlichen Anlaßrichtung des Verbrennungsmotors über das Hohlrad 19 von der zweiten Elektromaschine 27 gedreht wird. Wenn der Verbrennungsmotor gestartet ist, wird entsprechend der oben beschriebenen Gangwechsel der Rückwärtsgang an der zweiten Getriebewelle 32 herausgenommen, und statt dessen der erste Gang oder aber der dritte Gang eingelegt.

Zusätzlich sei erwähnt, daß es während des Startens des Verbrennungsmotors durch das von diesem dabei in den Antriebsstrang eingeleitete Drehmoment zu einem für den Fahrer unangenehmen Ruckeln kommen kann, das durch eine entsprechende Regelstrategie durch die beiden Elektromaschinen 26, 27 ausgeglichen werden kann.

Das bereits erwähnte Fahren des Kraftfahrzeugs ausschließlich mittels der Elektromaschinen 26, 27 hat zwangsläufig eine relativ hohe Energieentnahme aus der Bordbatterie zur Folge. Um die erforderliche Kapazität der Bordbatterie zu begrenzen bzw. ein Wiederaufladen während des verbrennungsmotorischen Betriebs zu ermöglichen, wurde bereits der Betrieb der beiden Elektromaschinen 26, 27 als Generator erwähnt. Besonders vorteilhaft ist es, die während des Schiebebetriebs im Kraftfahrzeug gespeicherte Rollenergie auszunutzen, um die Elektromaschinen 26, 27 als Generatoren zu betreiben. Dazu wird der Verbrennungsmotor im (lastfreien) Schiebebetrieb abgeschaltet und die Motorbremse 13 aktiviert. Somit werden die beiden mit den Elektromaschinen 26, 27 gekoppelten Sonnenräder 23, 24 über die sich drehenden Planetenträger 28, 29 getrieben.

Das oben beschriebene Getriebe 15 kann in vielfältiger Weise abgewandelt werden. So kann es beispielsweise erforderlich sein, an mindestens einer der beiden Elektromaschinen 26, 27 eine zusätzliche Bremse 43, 43a vorzusehen. Damit kann ein Anfahren der Kraftfahrzeugs aus dem Stand mit einer hohen Leistung ermöglicht werden. Dies erklärt sich daraus, daß beim Fahrzeugstillstand die beiden Elektromaschinen 26, 27 bei einem bereits erwähnten Übersetzungsverhältnis der Planetengetriebesätze 16, 17 von ca. 4:1 mit etwa der vierfachen Motordrehzahl laufen. Wird nun über den Verbrennungsmotor beim Anfahren ein relativ hohes Anfahrmoment in die Kurbelwelle 11 eingeleitet, so muß dieses von den Elektromaschinen 26, 27 abgestützt werden, was zwangsläufig kurzzeitig zu sehr hohen elektrischen Leistungen an den Elektromaschinen 26, 27 führt. Durch die Verwendung wenigstens einer zusätzlichen, mit wenigstens einer Elektromaschine 26, 27 zusammenwirkenden Bremse 43, 43a kann dieses Anfahrmoment von der Bremse 43, 43a aufgenommen und in Reibarbeit umgesetzt werden. Die Bremse 43, 43a kann als mechanisch wirkende Reibungsbremse (Backenoder Lamellenbremse) ausgebildet sein. Besonders vorteilhaft ist jedoch die Ausbildung der Bremse 43, 43a als Wirbelstrombremse. Diese Wirbelstrombremse kann zusätzlich als Bestandteil eines Zuheizersystems (zum Beispiel für einen wassergekühlten Generator) dienen und kurzzeitig sehr hohe Momente abstützen.

Das Getriebe 15 ist im Ausführungsbeispiel als Planetengetriebe dargestellt und beschrieben. Anstelle von Planetengetrieben können jedoch auch andere Arten von Umlaufgetrieben verwendet werden. Auch ist bei der Verwendung von Planetengetrieben eine andere Kopplung der einzelnen Elemente mit den Bauelementen der Planetengetriebe denkbar. So kann zum Beispiel der Verbrennungsmotor sein Drehmoment auch in die Planetenträger einleiten, während die Getriebewellen mit den Hohlrädern gekoppelt sind.

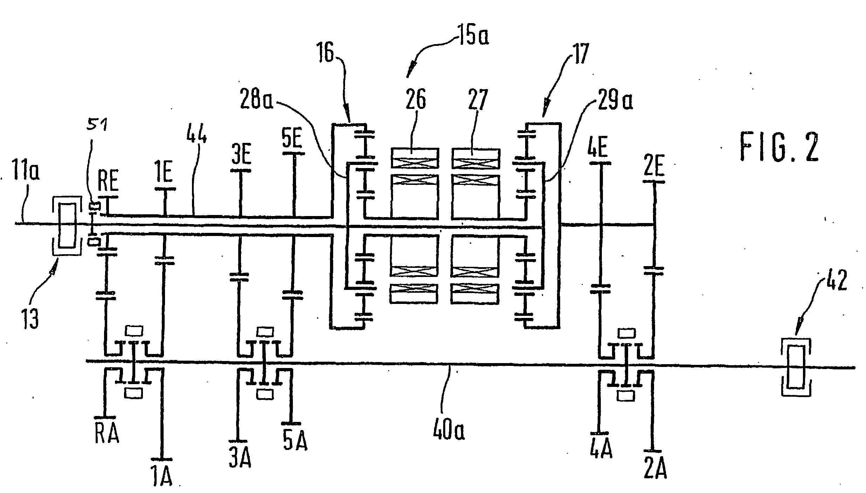

Drei weitere Varianten sind in den Figuren 2, 3 und 4 dargestellt:

In der Figur 2 ist ein Getriebe 15a gezeigt, das anstelle eines Dreiwellengetriebes entsprechend der Figur 1 als Hohlwellengetriebe ausgebildet ist. Die mit den Planetenträgern 28a, 29a gekoppelte Kurbelwelle 11a ist dabei von einer Hohlgetriebewelle 44 umfasst, auf der die Eingangszahnräder RE, 1E; 3E und 5E angeordnet sind, während in Verlängerung der Kurbelwelle 11a eine Getriebewelle 45 die Eingangszahnräder 4E und 2E trägt. Die Eingangszahnräder 1E bis 5E und RE wirken mit Ausgangszahnrädern 1A bis 5A und RA zusammen, die auf einer zu der Hohlgetriebewelle 44, der Kurbelwelle 11a und der Getriebewelle 45 parallel verlaufenden Ausgangswelle 40a angeordnet sind.

Zwischen der Kurbelwelle 11a und der Hohlwelle 44 ist eine Einrichtung 51, wie zum Beispiel eine Klauenkupplung, vorgesehen, die eine drehfeste Verbindung der Kurbelwelle 11a und der Hohlwelle 44 ermöglicht. Somit wird auf sehr einfache Weise eine Überbrückung der Elektromaschinen 26, 27 und der Planetengetriebesätze 16, 17 erzielt. Der Vorteil des in der Figur 2 dargestellten Getriebes 15a liegt weiterhin insbesondere in seiner schmäleren Bauweise.

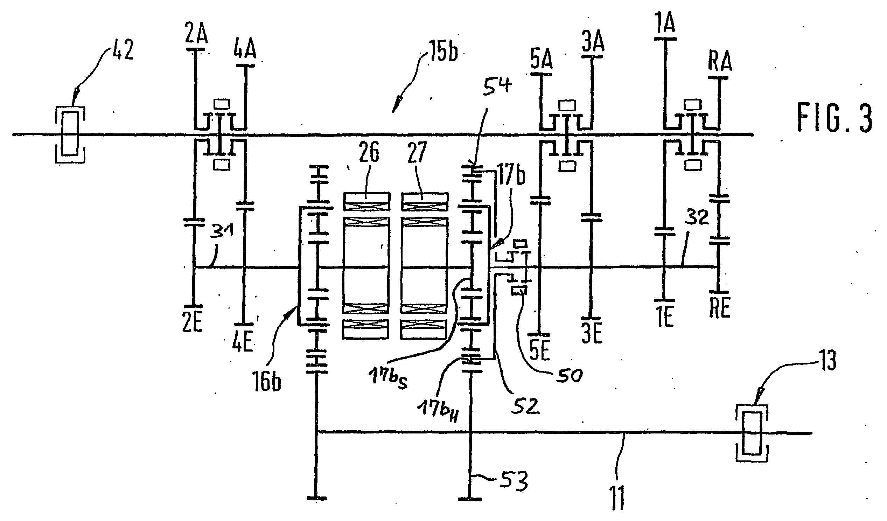

Das in der Figur 3 dargestellte Getriebe 15b unterscheidet sich von dem Getriebe 15 gemäß der Figur 1 insbesondere dadurch, daß die beiden Elektromaschinen 26, 27 nebeneinander und die beiden Planetengetriebesätze 16b, 17b (wie beim Getriebe 15a) spiegelbildlich zueinander angeordnet sind. Auf der Getriebewelle 32 ist neben dem Planetengetriebesatz 17b eine Schalteinheit 50 angeordnet. Die Schalteinheit 50 stellt eine drehfeste Verbindung der Getriebewelle 32 mit einem an dem Hohlrad 17b_{H} des Planetengetriebesatzes 17b angeformten, topfförmigen Flansch 52 her. Dadurch lassen sich das Hohlrad 17b_{H} und der Planetenträger 17b_{P} drehfest miteinander verbinden, wodurch sich diese mit der gleichen Winkelgeschwindigkeit drehen. Ein Drehmoment wird nun von einem auf der Kurbelwelle 11 angeordneten Zahnrad 53 auf eine Außenverzahnung 54 des Hohlrads 17b_{H} übertragen. Vom Hohlrad 17bH wird das Drehmoment über die Schalteinheit 50 auf die Getriebewelle 32 übertragen, wo dann die vier verschiedene Übersetzungen 1E/1A, 3E/3A, 5E/5A oder RE/RA wählbar sind. Somit dient die Schalteinheit 50 einer Unterdrückung von Relativbewegungen der Getriebeteile des als Planetengetriebesatz 17b ausgebildeten Leistungsgetriebes, der sich folglich als Block dreht. Es ist natürlich dennoch möglich, die Elektromaschine 27 zu betrieben, die dann die gleiche Drehzahl wie die Getriebewelle 32 hat, da das Sonnenrad 17b_{S} die gleiche Drehzahl wie das Hohlrad 17b_{H} und der Planetenträger 17b_{P} hat.

Alternativ kann zwischen der Kurbelwelle 11 und der Getriebewelle 32 jedoch auch, wie beim ersten Ausführungsbeispiel, ein Zahnradpaar 47 vorgesehen sein, wobei die Schalteinheit 50 auf der Kurbelwelle 11 angeordnet ist. Dadurch kann Auch hier läßt sich durch die Reihenanordnung wie bei dem Getriebe 15a der beiden Elektromaschinen 26, 27 und der Planetengetriebesätze 16b, 17b ein relativ kompaktes Getriebe verwirklichen.

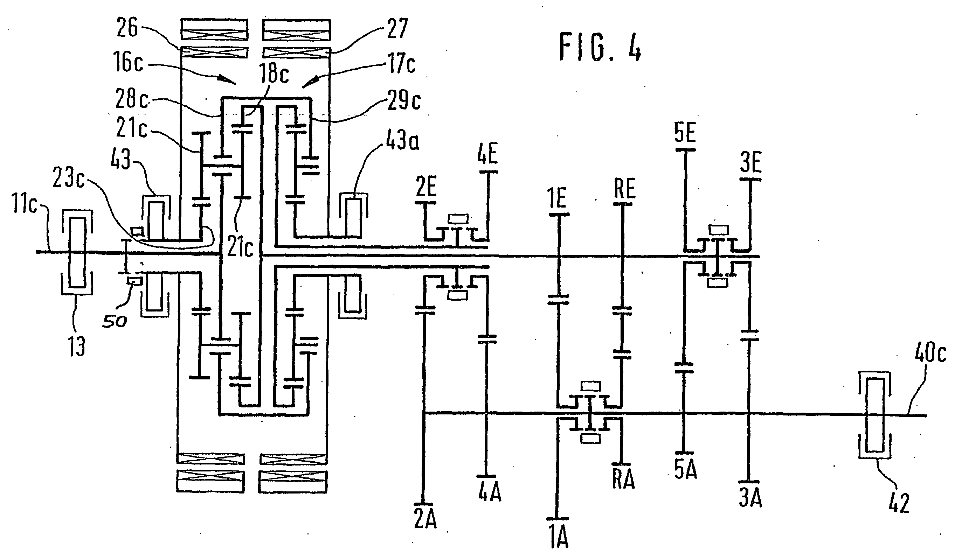

Eine besonders vorteilhafte Variante ist das in der Figur 4 dargestellte Getriebe 15c. Es unterscheidet sich von dem Getriebe 15a insbesondere dadurch, daß die Planetenräder 21c des Planetengetriebes 16c doppelt ausgeführt und durch eine starre Welle verbunden sind. Das erste Planetenrad 21c der linken Seite des Planetenträgers 28c kämmt mit dem mit der Elektromaschine 26 verbundenen Sonnenrad 23c, auf der rechten Seite des Planetenträgers 28c kämmt das zweite Planetenrad 21c mit dem Hohlrad 18c des Antriebs. Daraus ergibt sich ein sehr kompaktes Getriebe, das im Aufbau heutigen Schaltgetrieben ähnlich ist, wobei die Elektromaschinen den Bauraum einnehmen, der bei konventionellen Schaltgetrieben für die Kupplung erforderlich ist.

Das Sonnenrad 23c ist über eine Schalteinheit 50, die neben der Motorbremse 43 angeordnet ist, mit der Kurbelwelle 11c drehfest verbindbar. Dadurch ist das Sonnenrad 23c auch mit dem Planetenträger 28c verbindbar. Dies führt zu einer Unterdrückung der Relativbewegungen der Getriebeteile Planetenräder 21c, Sonnenrad 23c und Planetenträger 28c. Da die Planetenräder 21c nicht um die eigene Achse rotieren, wird das Hohlrad 18c mit der gleichen Drehzahl angetrieben. Das Hohlrad 18c wiederum triebt die Getriebewelle 32 an, auf der die Zahnräder 1E, RE, 3E und 5E angeordnet sind. Somit können mit der Schalteinheit 50 Relativbewegungen der Getriebeteile verhindern.

Alternativ oder zusätzlich läßt sich auch neben der Bremse 43a eine Schalteinheit anordnen. Dadurch können auch die Übersetzungen 2E/2A und 4E/4A verwendet werden.

Selbstverständlich ist es auch denkbar, die Getriebe 15a, 15b oder 15c mit wenigstens einer zusätzlichen Bremse 43, 43a entsprechend dem Getriebe 15 gemäß Figur 1 auszustatten.

Es ist auch möglich, daß an dem erfindungsgemäßen Getriebe 15; 15a; 15b; 15c nur ein Umlaufgetriebe 16, 17 bzw. leistungsverzweigendes Getriebe vorgesehen ist, an das nur eine Elektromaschine gekoppelt sind. Wesentlich ist, daß Mittel zur Kopplung der Eingangswelle 31, 32 mit der Ausgangswelle 40; 40a unter Überbrückung der wenigstens einen Elektromaschine 26, 27 und des wenigstens einen Umlaufgetriebes 16; 16c, 17; 17c vorgesehen sind. Dies resultiert trotz eines einfachen Aufbaus in einen hohen Gesamtwirkungsgrad. Im Überbrückungszustand der mindestens einen Elektromaschine und des wenigstens einen Umlaufgetriebes kann die Elektromaschine dennoch unter Last mitarbeiten, d.h. im Boostbetrieb, bei der Rekuperation und im Generatorbetrieb. Es ist immer noch eine stufenlose Änderung der Getriebeübersetzung möglich, wodurch auch im Notbetrieb, also bspw. dem Ausfall einer der Elektromaschinen 26, 27, der volle Fahrkomfort gegeben ist.

Statt des beschriebenen Getriebes 15; 15a; 15b; 15c in Form eines Schaltgetriebes kann auch ein anderes Getriebe, beispielsweise ein Getriebe in Form eines Stufenautomaten eingesetzt werden.

## Patentansprüche

1. Getriebe (15; 15a; 15b; 15c), insbesondere für Kraftfahrzeuge, mit einer Eingangswelle (11; 11a; 11c), die mit wenigstens einem, vorzugsweise zwei leistungsverzweigenden Getrieben (16; 16c, 17; 17c), vorzugsweise Umlaufgetrieben, gekoppelt ist, das oder die mit einer Ausgangswelle (40, 40a) koppelbar ist bzw. sind, sowie zwei mit dem mindestens einen leistungsverzweigenden Getriebe (16; 16c, 17; 17c) gekoppelten Elektromaschinen (26, 27), **dadurch gekennzeichnet, daß** Mittel (47, 50, 51) zur Kopplung der Eingangswelle (11; 11a; 11c) mit der Ausgangswelle (40; 40a) unter Überbrückung der zwei Elektromaschinen (26, 27) und des wenigstens einen leistungsverzweigenden Getriebes (16; 16c, 17; 17c) vorgesehen sind.

2. Getriebe (15; 15a; 15b; 15c), insbesondere für Kraftfahrzeuge, mit einer Eingangswelle (11; 11a; 11c), die mit wenigstens einem, vorzugsweise zwei leistungsverzweigenden Getrieben (16; 16c, 17; 17c), vorzugsweise Umlaufgetrieben, gekoppelt ist, das oder die mit einer Ausgangswelle (40, 40a) koppelbar ist bzw. sind, sowie zwei mit dem mindestens einen leistungsverzweigenden Getriebe (16; 16c, 17; 17c) gekoppelten Elektromaschinen (26, 27), **dadurch gekennzeichnet, daß** Mittel (47, 50, 51) zur Kopplung der Eingangswelle (11; 11a; 11c) mit der Ausgangswelle (40; 40a) unter Überbrückung der zwei Elektromaschinen (26, 27) und einer Unterdrückung von Relativbewegungen der Getriebeteile des wenigstens einen leistungsverzweigenden Getriebes (16; 16c, 17; 17c) vorgesehen sind.

3. Getriebe nach Anspruch 1 oder 2, **dadurch gekennzeichnet, daß** die Mittel (47, 50, 51) einer formschlüssigen Verbindung der Eingangswelle (11; 11a; 11c) mit wenigstens einer mit der Ausgangswelle (40; 40a) koppelbaren Getriebewelle (31, 32, 44) oder der Ausgangswelle (40; 40a) dienen.

4. Getriebe nach Anspruch 3, **dadurch gekennzeichnet, daß** die Mittel (47) wenigstens ein Zahnradpaar sind, wobei ein Zahnrad (48) auf der Eingangswelle (11; 11a; 11c) und mindestens ein Zahnrad (49) auf wenigstens einer der Getriebewellen (31, 32) angeordnet ist und daß zwischen dem Zahnrad (48) auf der Eingangswelle (11; 11a; 11c) oder dem mindestens einen Zahnrad (49) auf wenigstens einer der Getriebewellen (31, 32) eine Schalteinheit (50), vorzugsweise eine Klauenkupplung, vorgesehen ist.

5. Getriebe nach einem der Ansprüche 1 bis 4, **dadurch gekennzeichnet, daß** als leistungsverzweigende Getriebe zwei Umlaufgetriebe (16, 17) vorgesehen sind, daß die Elektromaschinen (26, 27) weder an die Eingangswelle (11; 11a; 11c) noch an die Ausgangswelle (40; 40a; 40c) gekoppelt sind und daß die Drehzahlen der beiden Elektromaschinen (26, 27) unabhängig voneinander veränderbar sind.

6. Getriebe nach einem der Ansprüche 3 bis 5, **dadurch gekennzeichnet, daß** auf jeder Getriebewelle (31, 32) Eingangszahnräder (1E bis 5e, RE) angeordnet sind, die in auf der Ausgangswelle (40; 40a) angeordneten Ausgangszahnrädern (1A bis 5A, RA) kämmen und daß Elemente (34 bis 38) zum kraftschlüssigen Verbinden der Eingangs- (1E bis 5e, RE) und der Ausgangszahnräder (1A bis 5A, RA) mit den Getriebewellen (31, 32) und der Ausgangswelle (40; 40a) vorgesehen sind und daß mit Ausnahme von Schaltpausen stets eine kraftschlüssige Verbindung zwischen beiden Getriebewellen (31, 32) und der Ausgangswelle (40; 40a) besteht.

7. Getriebe nach einem der Ansprüche 3 bis 6, **dadurch gekennzeichnet, daß** eine Getriebewelle als Hohlwelle (44) ausgebildet ist, die die Eingangswelle (11a) umfasst.

8. Getriebe nach einem der Ansprüche 1 bis 7, **dadurch gekennzeichnet, daß** die Umlaufgetriebe Planetengetriebe (16, 17) sind, deren Hohlräder (18, 19) mit der Eingangswelle (11; 11a; 11c), deren Sonnenräder (23; 23a, 24; 24a) mit den Elektromaschinen (26, 27) und deren Planetenträger (28, 29) mit den Getriebewellen (31, 32) gekoppelt sind oder daß die Umlaufgetriebe Planetengetriebe (16, 17) sind, deren Hohlräder (18, 19) mit den Getriebewellen (31, 32, 44), deren Sonnenräder (23, 24) mit den Elektromaschinen (26, 27) und deren Planetenträger (28, 29) mit der Eingangswelle (11; 11a; 11c) gekoppelt sind.

9. Getriebe nach einem der Ansprüche 1 bis 8, **dadurch gekennzeichnet, daß** zum Erzielen eines stufenlosen Übersetzungsverhältnisses die Drehzahlen der beiden Elektromaschinen (26, 27) veränderbar sind.

10. Getriebe nach einem der Ansprüche 1 bis 9, **dadurch gekennzeichnet, daß** die Eingangswelle (11) und die Ausgangswelle (40; 40a) jeweils eine Bremseinrichtung (13, 42) aufweist.

11. Getriebe nach einem der Ansprüche 1 bis 10, **dadurch gekennzeichnet; daß** wenigstens eine Elektromaschine (26, 27) in wirkverbindung mit einer Bremseinrichtung (43, 43a) angeordnet ist.

## Claims

1. Transmission (15; 15a; 15b; 15c), in particular for motor vehicles, with an input shaft (11; 11a; 11c) which is coupled to at least one, preferably two power-dividing transmissions (16; 16c, 17; 17c), preferably epicyclical transmissions, which can be coupled to an output shaft (40, 40a), and with two electric machines (26, 27) coupled to the at least one power-dividing transmission (16; 16c, 17; 17c), **characterized in that** means (47, 50, 51) are provided for coupling the input shaft (11; 11a; 11c) to the output shaft (40; 40a) so as to bridge the two electric machines (26, 27) and the at least one power-dividing transmission (16; 16c, 17; 17c).

2. Transmission (15; 15a; 15b; 15c), in particular for motor vehicles, with an input shaft (11; 11a; 11c) which is coupled to at least one, preferably at least two power-dividing transmissions (16; 16c; 17; 17c), preferably epicyclical transmissions, which can be coupled to an output shaft (40, 40a), and with two electric machines (26, 27) coupled to the at least one power-dividing transmission (16; 16c, 17; 17c), **characterized in that** means (47, 50, 51) are provided for coupling the input shaft (11; 11a; 11c) to the output shaft (40; 40a) so as to bridge the two electric machines (26, 27) and for the suppression of relative movements of the transmission parts of the at least one power-dividing transmission (16; 16c, 17; 17c).

3. Transmission according to Claim 1 or 2, **characterized in that** the means (47, 50, 51) serve for a positive connection of the input shaft (11; 11a; 11c) with at least one transmission shaft (31, 32, 44) couplable to the output shaft (40; 40a) or with the output shaft (40; 40a).

4. Transmission according to Claim 3, **characterized in that** the means (47) are at least one pair of gearwheels, one gearwheel (48) being arranged on the input shaft (11; 11a; 11c) and at least one gearwheel (49) being arranged on at least one of the transmission shafts (31, 32), and **in that** a shift unit (50), preferably a dog clutch, is provided between the gearwheel (48) on the input shaft (11; 11a; 11c) or the at least one gearwheel (49) on at least one of the transmission shafts (31, 32).

5. Transmission according to one of Claims 1 to 4, **characterized in that** two epicyclic transmissions (16, 17) are provided as a power-dividing transmission, **in that** the electric machines (26, 27) are not coupled either to the input shaft (11; 11a; 11c) or to the output shaft (40; 40a; 40c), and **in that** the rotational speeds of the two electric machines (26, 27) can be varied independently of one another.

6. Transmission according to one of Claims 3 to 5, **characterized in that** each transmission shaft (31, 32) has arranged on it input gearwheels (1E to 5E, RE) which mesh in output gearwheels (1A to 5A, RA) arranged on the output shaft (40; 40a), **in that** elements (34 to 38) for the non-positive connection of the input gearwheels (1E to 5E, RE) and of the output gearwheels (1A to 5A, RA) with the transmission shaft (31, 32) and the output shaft (40; 40a) are provided, and **in that**, with the exception of shift intermissions, there is always a non-positive connection between the two transmission shafts (31, 32) and the output shaft (40; 40a).

7. Transmission according to one of Claims 3 to 6, **characterized in that** one transmission shaft is designed as a hollow shaft (44) which surrounds the input shaft (11a).

8. Transmission according to one of Claims 1 to 7, **characterized in that** the epicyclic transmissions are planetary transmissions (16, 17), the ring wheels (18, 19) of which are coupled to the input shaft (11; 11a; 11c), the sun wheels (23, 23a; 24; 24a) of which are coupled to the electric machines (26, 27) and the planet carriers (28, 29) of which are coupled to the transmission shafts (31, 32), or **in that** the epicyclic transmissions are planetary transmissions (16, 17), the ring wheels (18, 19) of which are coupled to the transmission shafts (31, 32, 44), the sun wheels (23, 24) of which are coupled to the electric machines (26, 27) and the planet carriers (28, 29) of which are coupled to the input shaft (11; 11a; 11c).

9. Transmission according to one of Claims 1 to 8, **characterized in that**, to achieve a continuous transmission ratio, the rotational speeds of two electric machines (26, 27) can be varied.

10. Transmission according to one of Claims 1 to 9, **characterized in that** the input shaft (11) and the output shaft (40; 40a) each have a braking device (13, 42).

11. Transmission according to one of Claims 1 to 10, **characterized in that** at least one electric machine (26, 27) is arranged in operative connection with a braking device (43, 43a).

## Revendications

1. Transmission (15 ; 15a ; 15b ; 15c), en particulier pour des véhicules automobiles, comportant un arbre d'entrée (11 ; 11a ; 11c) qui est couplé à au moins une, de préférence deux, transmission(s) (16 ; 16c ; 17 ; 17c) répartissant la puissance, de préférence des engrenages épicycloïdaux, qui peut ou peuvent être couplée(s) à un arbre de sortie (40, 40a) ainsi que deux machines électriques (26, 27) couplées à l'au moins une transmission (16 ; 16c ; 17 ; 17c) répartissant la puissance,
**caractérisée par**
des moyens (47, 50, 51) pour coupler l'arbre d'entrée (11 ; 11a ; 11c) à l'arbre de sortie (40, 40a) en enjambant les deux machines électriques (26, 27) et l'au moins une transmission (16 ; 16c ; 17 ; 17c) répartissant la puissance.

2. Transmission (15 ; 15a ; 15b ; 15c), en particulier pour des véhicules automobiles, comportant un arbre d'entrée (11 ; 11a; 11c) couplé à au moins une, de préférence deux, transmission(s) (16 ; 16c ; 17 ; 17c) répartissant la puissance, de préférence des engrenages épicycloïdaux, qui peut ou peuvent être couplée(s) à un arbre de sortie (40, 40a), ainsi que deux machines électriques (26, 27) couplées à l'au moins une transmission (16 ; 16c ; 17 ; 17c) répartissant la puissance,
**caractérisée par**
des moyens (47, 50, 51) pour coupler l'arbre d'entrée (11 ; 11a; 11c) à l'arbre de sortie (40, 40a) en enjambant les deux machines électriques (26, 27), pour réprimer des mouvements relatifs des pièces de transmission de l'au moins une transmission (16 ; 16c; 17 ; 17c) répartissant la puissance.

3. Transmission selon la revendication 1 ou 2,
**caractérisée en ce que**
les moyens (47, 50, 51) servent à une liaison de forme de l'arbre d'entrée (11 ; 11a; 11c) à l'arbre de sortie (40, 40a) ou à au moins un des arbres de transmission (31, 32, 44) qui peuvent être couplés à cet arbre de sortie (40, 40a).

4. Transmission selon la revendication 3,
**caractérisée en ce que**
les moyens (47) sont au moins une paire de roues dentées, une roue dentée (48) étant placée sur l'arbre d'entrée (11 ; 11a ; 11c) et au moins une roue dentée (49) sur au moins un des arbres de transmission (31, 32), et une unité de connexion (50), de préférence un accouplement à griffes, est prévue entre la roue dentée (48) située sur l'arbre d'entrée (11 ; 11a ; 11c) ou au moins une roue dentée (49) située sur au moins un des arbres de transmission (31, 32).

5. Transmission selon l'une des revendications 1 à 4,
**caractérisée en ce que**
deux engrenages épicycloïdaux (16, 17) sont prévus comme transmission répartissant la puissance, les machines électriques (26, 27) ne sont couplées ni à l'arbre d'entrée (11 ; 11a ; 11c) ni à l'arbre de sortie (40, 40a, 40c), et les vitesses de rotation des deux machines électriques (26, 27) peuvent être modifiées indépendamment l'une de l'autre.

6. Transmission selon l'une des revendications 3 à 5,
**caractérisée en ce que**
sur chaque arbre de transmission (31, 32) sont disposées des roues dentées d'entrée (1E à 5E, RE) qui s'engrènent dans des roues dentées de sortie (1A à 5A, RA) disposées sur l'arbre de sortie (40, 40a), et des éléments (34 à 38) sont prévus pour relier par force les roues dentées d'entrée (1E à 5E, RE) et les roues dentées de sortie (1A à 5A, RA) aux arbres de transmission (31, 32) et à l'arbre de sortie (40, 40a), et on a constamment, à l'exception de pauses de connexion, une liaison par forces entre les deux arbres de transmission (31, 32) et l'arbre de sortie (40,40a).

7. Transmission selon l'une des revendications 3 à 6,
**caractérisée en ce qu'**
un arbre de transmission est conçu sous forme d'arbre creux (44) qui entoure l'arbre d'entrée (11a).

8. Transmission selon l'une des revendications 1 à 7,
**caractérisée en ce que**
les engrenages épicycloïdaux sont des engrenages planétaires (16, 17) dont les roues creuses (18, 19) sont couplées à l'arbre d'entrée (11; 11a ; 11c), dont les roues solaires (23 ; 23a, 24 ; 24a) sont couplées aux machines électriques (26, 27) et dont les porte-satellites (28, 29) sont couplés aux arbres de transmission (31, 32), ou les engrenages épicycloïdaux sont des engrenages planétaires (16, 17) dont les roues creuses (18, 19) sont couplées aux arbres de transmission (31, 32, 44), dont les roues solaires (23, 24) sont couplées aux machines électriques (26, 27) et dont les porte-satellites (28, 29) sont couplés à l'arbre d'entrée (11; 11a ; 11c).

9. Transmission selon l'une des revendications 1 à 8,
**caractérisée en ce qu'**
on peut modifier les vitesses de rotation des deux machines électriques (26, 27) pour obtenir un rapport continu de changements de vitesses.

10. Transmission selon l'une des revendications 1 à 9,
**caractérisée en ce que**
l'arbre d'entrée (11) et l'arbre de sortie (40 ; 40a) présentent respectivement une installation de freinage (13, 42).

11. Transmission selon l'une des revendications 1 à 10,
**caractérisée en ce qu'**
au moins une machine électrique (26, 27) est placée en liaison effective avec une installation de freinage (43, 43a).
